# EUROPEAN PATENT APPLICATION

(11) **EP 3 816 493 A1**
(43) Date of publication of application: **05.05.2021**
(21) Application number: 19382946.2
(22) Date of filing: 30.10.2019
(51) Int. Cl.: F16K 31/122

(54) **OVERFILL VALVE WITH AN ACTUATED OBTURATOR**

(71) Applicant: Airbus Operations, S.L., 28906 Getafe (ES)
(72) Inventor: FERNÁNDEZ LÓPEZ, Pio, 28905 Getafe (ES); CHIABRANDO, Marcos Javier, 28906 Getafe (ES)

(57) **Abstract**

An overfill valve, in particular to an overfill valve for a gearbox of an aircraft engine, comprising an intake (11) adapted to receive an oil overfill (27), a drain (12) adapted to drain said oil (27) and an actuated obturator (13) adapted to, in an open position, allow a flow of said oil between the intake and the drain and, in a closed position, impede or stop a flow of said oil from the intake to the drain, said actuated obturator being actuated by a pressurized fluid (18) of the gearbox or engine.

## Description

The invention relates to overfill valves. The invention also relates to a gearbox and an aircraft comprising such valve.

Particularly, the object of the present invention is to provide an overfill valve for an auxiliary power unit (APU) oil sump integrated in the gearbox of an APU in an aircraft.

An APU in an aircraft provides electricity in addition to the power produced by the main engine. Generally, the APU uses gas turbine engines, like those of the main engine, although smaller. An APU turbine is therefore limited in efficiency and creates gaseous emissions similar to the main engine.

The APU lubrication system provides pressurized oil to the APU gearbox and the electrical generator for lubrication and heat removal. The lubrication system comprises a mechanically driven lubricating module or oil sump integrated in the APU gearbox. The APU gearbox reduces the turbine shaft revolutions per minute to a speed suitable to operate the gearbox mounted accessories. Accessories include the mechanically driven lubricating module, a fuel control unit, an electric starter and the APU electrical generator.

The oil level in the oil sump can be conventionally checked using a sight glass on the oil filler. However, oil overfill events occur during maintenance. Improvement of the APU lubrication system to avoid overfill in the oil sump of the APU gearbox would thus be beneficial. Besides, because the oil sump is part of the APU gearbox, with many moving parts, placing conventional draining devices may be challenging.

The present invention provides a valve that is easy to mount.

The invention proposes a valve that may be mounted as retrofit on existing oil sumps.

The invention proposes a valve that is particularly economical.

The invention also proposes a valve that require no maintenance.

The invention proposes a valve that is particularly compact.

The invention also proposes a valve that maintains the airtightness of a pressurized gearbox assembly.

The invention proposes an overfill valve comprising:
- an intake adapted to receive a predetermined liquid,
- a drain adapted to drain said liquid,
characterized in that it further comprises:
- an actuated obturator adapted to:
   - in a first position, allow a flow of said liquid between the intake and the drain,
   - in a second position, impede a flow of said liquid from the intake to the drain.

The overfill valve may be for a sump with an overfill sump port. The intake may be adapted to be mounted on the sump port. The intake may be adapted to receive liquid from the sump port, in particular the intake may be adapted to receive an excess of liquid from the sump port.

In a first position, called open position, the actuated obturator allows a flow of said liquid between the intake and the drain.

In a second position, called impeding position, the actuated obturator may either limit or stop a flow of said liquid from the intake to the drain. More particularly, the actuated obturator is adapted to, in a predetermined position called closed position, prevent any flow of said liquid from the intake towards the drain.

The overfill valve comprises a hydraulic circuit between the intake and the drain. The hydraulic circuit is adapted to allow a flow of said liquid.

The overfill valve may comprise a housing comprising the intake and the drain.

The overfill valve may comprise a pressurized fluid intake.

The pressurized fluid intake is adapted to receive a fluid at a pressure higher than an ambient atmospheric pressure.

The housing comprises a pressurized fluid intake.

The actuated obturator may be hydraulically or electrically actuated.

The actuated obturator may be adapted to be actuated between said first position and said second position by a pressurized fluid applied at the pressurized fluid intake.

A pressurized fluid is a fluid at a pressure higher than the ambient atmospheric pressure. The pressurized fluid may be a pressurized fluid from an engine, for example an APU. The pressurized fluid may be a fluid from a fuel pressurized line, an oil pressurized line, an air pressurized line, etc. of an engine.

Alternatively or in combination the actuated obturator may be actuated by an electric actuator. The overfill valve may comprise an electric actuator for actuating the actuated obturator.

The actuated obturator may comprise a piston adapted to translate under the effect of a pressurized fluid applied at the pressurized fluid intake. The overfill valve comprises a housing comprising a cylinder. The actuated obturator comprises a piston adapted to translate in said cylinder. The piston is adapted to translate between a first position corresponding to an open position of the actuated obturator, and a second position corresponding to an impeding position of the actuated obturator.

The hydraulic circuit of the overfill valve comprises at least a conduit allowing said predetermined liquid to flow from the intake to the drain.

The actuated obturator may comprise an obturating head adapted to impede a flow of liquid in a conduit between the intake and the drain. The obturating head is adapted to be displaced between:
- a first position in which it allows a flow of liquid in a conduit between the intake and the drain, thus corresponding to an open position of the actuated obturator, and
- a second position in which it at least partially plugs said conduit such that a flow of said liquid from the intake to the drain is impeded (either limited or stopped), thus corresponding to an impeding position of the actuated obturator.

More particularly, the obturating head may be displaced in a position in which it plugs the conduit such that no liquid may flow from the intake to the drain, thus corresponding to a closed position of the actuated obturator.

The obturating head may have different shapes, such as for example conical or spherical shapes.

The obturating head is adapted to be displaced by the piston between a first position and a second position. The obturating head is adapted to be displaced between a first position corresponding to an open position of the actuated obturator, and a second position corresponding to an impeding position (including a closed position) of the actuated obturator.

The obturating head is adapted to be displaced by the piston between a first position and a second position under the effect of a pressurized fluid applied at the pressurized fluid intake.

The obturating head may be directly mounted to the piston, or may form a single solid part with the piston.

The obturating head is adapted to rest against a seat in a closed position.

The obturating head may be adapted to rest against a seat of the housing in a closed position.

The seat may be formed directly in the housing of the overfill valve. A conduit allowing a flow of said liquid from the intake to the drain opens on the seat, such that when the obturating head comes in contact with the seat, it obturates said conduit.

The seat may have a shape complementary to at least part of the shape of the obturating head.

The closed position of the obturating head against the seat corresponds to a closed position of the actuated obturator.

The overfill valve may comprise a seal between the obturating head and the seat. The overfill valve may comprise a first seal. Such first seal may provide airtightness between the pressurized air intake and the intake and/or between the pressurized air intake and the drain. More particularly, such seal may provide airtightness between the pressurized air intake and conduits for draining said predetermined liquid from the intake to the drain. Such seal may thus allow to maintain a sufficient pressure difference between the pressurized air intake and the conduits in order to maintain the actuated obturator in a closed position.

The overfill valve may comprise a second seal. Such second seal may provide tightness between an intake conduit and a drain conduit so as to ensure that no said liquid may flow from the intake towards the drain when the actuated obturator is in a closed position.

The overfill valve may comprise a release device adapted to displace the actuated obturator in a first position in which a flow of liquid between the intake and the drain is allowed.

The release device is adapted to displace the actuated obturator from a second position, called impeding position or closed position, to a first position, called open position. The release device is adapted to open, under predetermined conditions, the overfill valve. In particular the release device may be adapted to displace the actuated obturator towards an open position when no pressurized fluid is applied at the pressurized fluid intake. The release device therefore ensures that the overfill valve is open as long as no pressurized fluid is applied at its pressurized fluid intake.

The release device may be an elastic device.

The release device may be adapted to deform elastically under a displacement of the actuated obturator by application of a pressurized fluid at the pressurized intake. The release device may release its elastic energy once the application of pressurized fluid at the pressurized intake is deactivated, such that the release device returns the obturating valve to its first position in which a flow of liquid is allowed between the intake and the drain.

In some embodiments, the release device may comprise a spring. The spring may be placed between a housing stop and the piston of the actuated obturator to displace the actuated obturator back to a predetermined position such as an open position.

At least part of an external surface of the housing may be threaded.

An external surface of the intake may be threaded. In particular a portion of the housing situated on the intake side, is cylindrical and threaded on its outer surface. This allows to screw the valve in a correspondingly threaded sump port. The overfill valve may thus be mounted to an oil overfill port of a gearbox or of an engine.

The housing of the chamber may be directly inserted in a port of an oil sump. Alternatively, the housing may comprise a dedicated connection portion or intake which extends beyond an extremity of the chamber, said connection portion being able to allow a flow of liquid from outside the housing to the intake opening. The connection portion may have a different diameter, in particular a smaller diameter, than the chamber. This connection portion would thus allow to easily mount a valve of the invention on any type and size of available port on an oil sump such as for example an oil sump of an APU gearbox.

The drain may be adapted to be connected to a drain collector.

The drain collector may be a pipe or another device or housing adapted to collect liquid from the drain of a valve according to the invention towards a dedicated reservoir or evacuation.

The invention also extends to a gearbox comprising at least one overfill valve according to the invention.

In a gearbox according to the invention, the pressurized fluid intake may be hydraulically connected to a pressurized fluid circuit of an engine. The pressurized fluid circuit may for example be a fuel pressurized line, an oil pressurized line, an air pressurized line, etc..

The invention also extends to an engine comprising a gearbox according to the invention. The pressurized fluid intake may be hydraulically connected to a pressurized fluid circuit, such as for example a fuel pressurized line, an oil pressurized line, an air pressurized line, etc..

The invention also extends to an aircraft comprising a gearbox according to the invention.

The invention also extends to an aircraft comprising an engine according to the invention.

The invention also extends to other possible combinations of features described in the above description and in the following description relative to the figures. In particular, the invention extends to gearboxes, engines and aircrafts comprising features described in relation to an overfill valve according to the invention; the invention extends to aircrafts comprising features described in relation to a gearbox and/or an engine according to the invention.

Some specific exemplary embodiments and aspects of the invention are described in the following description in reference to the accompanying figures.
Figure 1 is a schematic representation of a longitudinal cross-section of an overfill valve embodiment according to the invention, in a closed position.
Figure 2 is a schematic representation of a longitudinal cross-section of an overfill valve embodiment according to the invention, in an open position.
Figure 3 is a schematic perspective and partially exploded representation of a gearbox according to the invention.
Figure 4 is a schematic representation of an aircraft according to the invention.

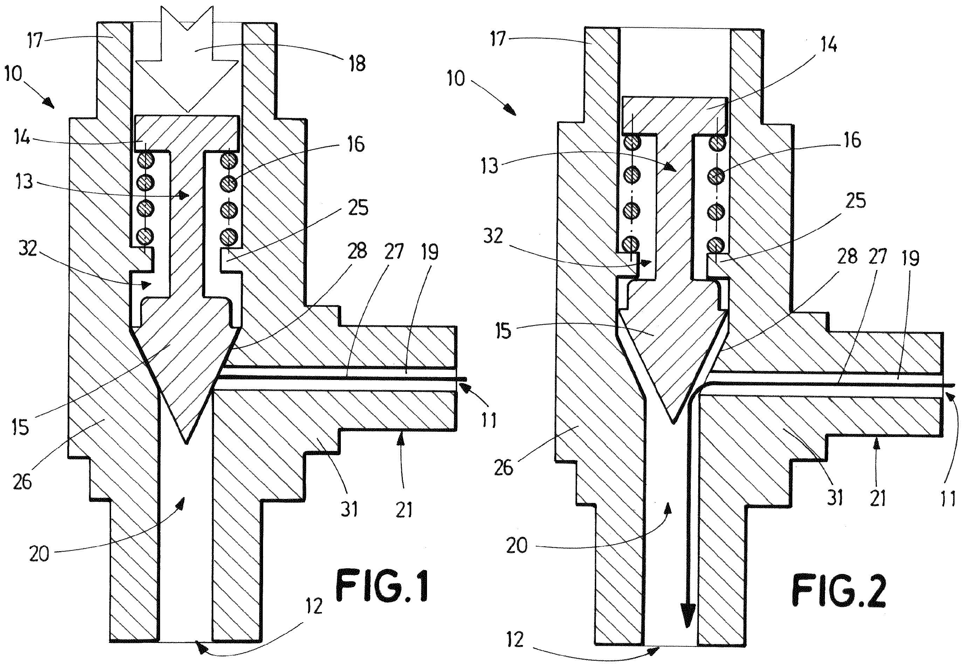

In figures 1 and 2, an overfill valve 10 according to the invention is represented. The overfill valve represented is an overfill valve for a gearbox oil sump. In this embodiment, the liquid is a lubrication oil.

In figure 1, the overfill valve is closed and impedes the oil 27 to flow from the intake 11 to the drain 12.

In figure 2, the overfill valve is open and lets the oil 27 flow from the intake 11 to the drain 12.

The overfill valve 10 comprises a housing 26.

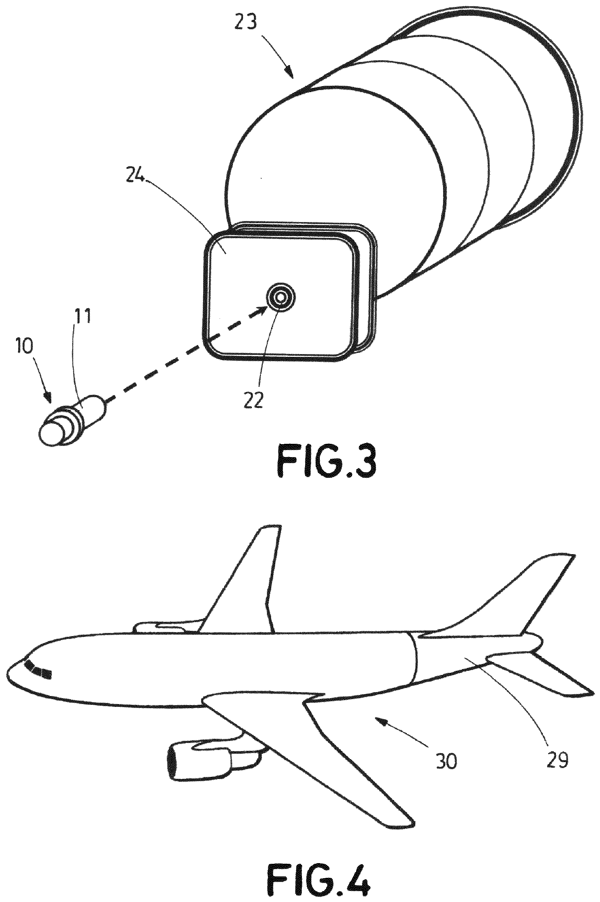

The housing 26 comprises a first end forming an intake 11. The intake 11 is adapted to be connected to a sump port 22 of a gearbox 23 oil sump as represented on figure 3. The intake comprises an intake conduit 19 for allowing the oil to flow through the housing 26 from the intake open end.

An external surface 21 of the intake 11 is threaded. The overfill valve 10 may thus be screwed into a correspondingly threaded sump port 22 so as to mount the overfill valve in the sump port 22 of a gearbox for example.

The housing 18 comprises a shoulder 31. The shoulder limits the mounting of the overfill valve into the sump port. The position of the shoulder 31 along the threaded external surface 21 may be so as to ensure that the overfill valve is correctly mounted, in particular with the right angle, in the sump port 22. In the present embodiment, the shoulder 31 may rest on an external surface of a sump when the drain 12 and the pressurized fluid intake are oriented respectively towards a connection to an engine oil sump and a connection to a pressurized fluid.

The housing comprises a second end forming a drain 12. The drain is adapted to be connected to a discharge connection. For example when the sump is an APU oil sump, the drain 12, may be hydraulically connected to an APU drainage. The drain 12 comprises a drain conduit 20 for allowing the oil to flow through the housing 26 towards the drain open end.

The housing further comprises a third end forming a pressurized fluid intake 17 which is adapted to be connected to a source of pressurized fluid, such as for example air pressurized at a higher pressure than ambient pressure. In particular the pressurized fluid intake 17 is adapted to be hydraulically connected to a fitting of a pipe leading to a pressurized fluid source.

The overfill valve further comprises an actuated obturator 13, movably mounted in the housing 26.

The actuated obturator comprises a piston 14 mounted in a cylinder 32 of the housing so as to be displaced in translation in the cylinder 32 under the effect of the application of a pressurized fluid 18 at the pressurized fluid intake 17. The piston 14 is in hydraulic connection with the pressurized fluid intake 17.

The actuated obturator also comprises an obturating head 15. The obturating head 15 is integrally formed as one solid part with the piston 14 such that the obturating head 15 is displaced under the effect of the application of a pressurized fluid 18 at the pressurized fluid intake 17. In a closed position, the obturating head 15 is adapted to rest against a seat 28 formed in the housing at an end of said cylinder 32. The seat 28 may comprise a seal (not represented). Such seal may improve the tightness between the actuated obturator 13 and the housing 26 when the actuated obturator is in a closed position. In particular the seal may isolate the pressurized fluid intake 17 of the valve from the intake 11 and the drain 12, so as to maintain a different pressure between the two sides of the valve. The piston 14 may also comprise a seal with the cylinder of the housing 26 in which it is mobile.

The intake conduit 19 opens on the seat 28 of the obturating head 15.

The intake conduit 19 and the drain conduit 20 both open on the seat 28 of the obturating head 15. The intake conduit 19 and the drain conduit 20 are thus hydraulically connected so as to form a continuous conduit allowing a flow of oil through the housing 26 form the intake open end to the drain open end when the actuated obturator 13 is in an open position.

The overfill valve further comprises a release device. In this embodiment the release device comprises a spring 16. A first end of the spring 16 rest against a second face of the piston 14. A first face of the piston 14, opposite the second face, is adapted to be exposed to a pressurized fluid 18 applied at the pressurized fluid intake 17. A second end of the spring rests against a cylinder shoulder 25 of the housing 26 formed in the cylinder 32. The spring is adapted to maintain the actuated obturator in an open position as long as no sufficient pressure is applied at the pressurized fluid intake 17. The spring is adapted to deform elastically and let the actuated obturator move to an impeding position or closed position, with the obturating head 15 resting against the seat 28, when a pressure of fluid 18 - or difference of pressure between the pressurized fluid intake 17 and the pressure in the conduits 19, 20 - higher than a predetermined pressure (or pressure difference) is applied at the pressurized fluid intake 17.

The obturating head 15 may also rest against the cylinder shoulder 25 when in an open position such as shown on Figure 2. The spring 16 may maintain the obturating head 15 in this position against the cylinder shoulder 25 as long as no sufficient pressure is applied at the pressurized fluid intake 17. The spring 16 may beneficially still be elastically deformed with stored elastical energy in the open position as represented on figure 2.

On figure 3, a gearbox assembly 23 according to the invention is represented. The gearbox is associated with an engine (not represented), for example an APU. The gearbox 23 comprises an oil tank 24. The oil tank 24 comprises an overfill port or sump port 22. An overfill valve 10 according to the invention is represented which is adapted to be mounted in the sump port 22. The intake of the overfill valve may be mounted in the sump port 22, while the drain 12 may stick out of the oil tank so as to be connected to an oil drainage such as for example an engine oil drainage. The drain 20 may be oriented with a bottom orientation so as to facilitate the oil drainage with gravity.

In an engine according to the invention, a pressurized fluid is only applied at the pressurized fluid intake 17 when the engine is running.

Oil is added to a gearbox when the engine is stopped. Therefore, there is no pressurized fluid applied at the pressurized fluid intake 17, such that the actuated obturator is in an open position when oil is added. If an excess of oil is added to the engine or gearbox, the oil sump full level will be exceeded and excess oil 27 will accordingly flow into the intake 11 of the overfill valve 10 and through the intake conduit 19 and drain conduit 20 to the drain 12 open end, thereby efficiently draining an oil overfill. This situation is represented in figure 2.

Should an oil overfill happen while the engine is running, since a pressurized fluid of the engine is applied at the pressurized fluid intake 17 as long as the engine is running, the actuated obturator is in a closed position and no oil may flow from the intake conduit 19 to the drain conduit 20, thereby avoiding any oil drainage while the engine is running. This situation is represented in figure 1.

In figure 4 an aircraft 30 is represented which comprises an APU engine according to the invention and its associated gearbox, installed in a rear fuselage section 29 of the aircraft.

The invention is not limited to the specific embodiments herein disclosed as examples. The invention also encompasses other embodiments not herein explicitly described, which may comprise various combinations of the features herein described.

## Claims

1. An overfill valve (10) comprising:
- an intake (11) adapted to receive a predetermined liquid (27),
- a drain (12) adapted to drain said liquid (27),
**characterized in that** it further comprises:
- an actuated obturator (13) adapted to:
• in a first position, allow a flow of said liquid (27) between the intake (11) and the drain (12),
• in a second position, impede a flow of said liquid (27) from the intake (11) to the drain (12).

2. Overfill valve according to claim 1, further **characterized in that** it further comprises a pressurized fluid intake (17).

3. Overfill valve according to claim 2, further **characterized in that** the actuated obturator (17) is adapted to be actuated between said first position and said second position by a pressurized fluid (18) applied at the pressurized fluid intake (17).

4. Overfill valve according to any of claim 2 to 3, further **characterized in that** the actuated obturator (13) comprises a piston (14) adapted to translate under the effect of a pressurized fluid (18) applied at the pressurized fluid intake (17).

5. Overfill valve according to any of claim 1 to 4, further **characterized in that** the actuated obturator (13) comprises an obturating head (15) adapted to impede a flow of liquid (27) in a conduit (19, 20) between the intake (11) and the drain (12).

6. Overfill valve according to claims 4 and 5, further **characterized in that** the obturating head (15) is adapted to be displaced by the piston (14) between a first position and a second position.

7. Overfill valve according to claims 4 and 5 or according to claim 6, further **characterized in that** the obturating head (15) is adapted to rest against a seat (28) in a closed position.

8. Overfill valve according to claim 7, further **characterized in that** it comprises a seal between the obturating head (15) and the seat (28).

9. Overfill valve according to any of claim 1 to 8, further **characterized in that** it comprises a release device (16) adapted to displace the actuated obturator (13) in a first position in which a flow of liquid (27) between the intake (11) and the drain (12) is allowed.

10. Overfill valve according to claim 9, further **characterized in that** the release device (16) is an elastic device.

11. Overfill valve according to any of claim 1 to 10, further **characterized in that** an external surface (21) of the intake (11) is threaded.

12. Gearbox (23) comprising at least one overfill valve (10) according to any of claim 1 to 11.

13. Gearbox (23) according to claim 12, further **characterized in that** the pressurized fluid intake (17) is hydraulically connected to a pressurized fluid circuit of an engine.

14. Engine comprising a gearbox (23) according to any of claims 12 or 13.

15. Aircraft (30) comprising an engine according to claim 14.
